# EUROPÄISCHE PATENTSCHRIFT

(11) **EP 0 876 193 B1**
(45) Veröffentlichungstag und Bekanntmachung des Hinweises auf die Patenterteilung: **09.02.2000**
(21) Anmeldenummer: 96938158.1
(22) Anmeldetag: 08.11.1996
(51) Int. Cl.: B01D 53/74, B01D 53/50, B01D 53/64

(54) **VERFAHREN UND VORRICHTUNG ZUM REINIGEN VON VERBRENNUNGSABGASEN AUS FEUERUNGSANLAGEN**
METHOD AND DEVICE FOR CLEANING FLUE GASES FROM FURNACES
PROCEDE ET DISPOSITIF POUR PURIFIER DES GAZ DE FUMEE EMANANT DE CHAUDIERES

(30) Priorität: 13.11.1995 DE 19542065
(43) Veröffentlichungstag der Anmeldung: 11.11.1998
(73) Patentinhaber: STEAG Aktiengesellschaft, 45128 Essen (DE)
(72) Erfinder: WINKLER, Hermann, D-45665 Recklinghausen (DE); NEUMANN, Marion, D-44536 Lünen (DE)
(86) Internationale Anmeldenummer: EP9604899
(87) Internationale Veröffentlichungsnummer: WO9718029

(56) Entgegenhaltungen:
- EP-A- 0 367 148
- EP-A- 0 496 432
- EP-A- 0 628 341
- WO-A-93/08902
- DE-A- 4 123 258
- DE-A- 4 441 090

## Beschreibung

Die Erfindung betrifft ein Verfahren und eine Vorrichtung zum Reinigen von schwefelhaltigen Verbrennungsabgasen aus Feuerungsanlagen, wobei die Verbrennungsabgase unter Zugabe von Aktivkohlepartikeln einer Entschwefelungs-Naßwäsche unterworfen werden.

Ein derartiges Verfahren ist aus der DE 41 23 258 A1 bekannt. Unter den Bedingungen der Naßwäsche adsorbieren die Aktivkohlepartikel die in den Verbrennungsabgasen enthaltenen Schwermetalle und ferner auch organische Verunreinigungen, wie Dioxine und Furane. Die Entfernung der Schwermetalle, insbesondere auch des Quecksilbers, und der organischen Bestandteile vollzieht sich also in der Entschwefelungsstufe, ohne daß zusätzliche Reinigungsschritte erforderlich wären. Der anlagen- und betriebstechnische Aufwand ist also vergleichsweise gering.

Auch kann mit einer relativ geringen Menge an Aktivkohlepartikeln gearbeitet werden. Allerdings liegt hierin immer noch ein nicht zu vernachlässigender Aufwand, da es sich bei Aktivkohle um ein relativ teueres Material handelt.

Der Erfindung liegt daher die Aufgabe zugrunde, die erforderliche Menge an Kostenaufwendigen AktivkohlepartikeIn zu minimieren.

Zur Lösung dieser Aufgabe ist das Verfahren nach der Erfindung dadurch gekennzeichnet, daß die Aktivkohlepartikel mit Partikeln aus gelöschtem Kalk und/oder aus Kalkstein gemischt werden und daß die Partikelmischung stromauf eines der Naßwäsche vorgeschalteten Abgas-Wärmetauschers in die Verbrennungsabgase eingegeben wird.

Zwar ist es aus der EP-A-0 628 341 bekannt, Aktivkohlepartikel und Partikel aus gelöschtem Kalk stromauf einer Naßwäsche in Verbrennungsabgase einzugeben, jedoch geschieht dies vor einer Entstaubungsbehandlung, so daß die Partikel nicht in die Naßwäsche gelangen. Zum einen findet keine Entschwefelungsbehandlung statt, und zum anderen läßt sich eine Reduzierung der erforderlichen Menge an Aktivkohlepartikeln nicht erzielen.

Ferner ist es aus der EP-A-O 496 432 bekannt, sowohl saure Schadstoffe als auch Schwermetalle aus einem Abgasstrom zu entfernen, und zwar unter Einsatz von Aktivkohle und Calciumhydroxid. Auch hier spielt die Verminderung des Aktivkohleeinsatzes keine Rolle.

Letzteres ist jedoch mit dem Verfahren nach der Erfindung möglich, Siehe auch EP-B-0 792 186, in diesem Zusammenhang, die am 13.11.95 angemeldet und am 03.09.97 als Anmeldung veröffentlicht wurde. Überraschenderweise wurde gefunden, daß die vorgeschlagene, relativ einfache Maßnahme zu einer Verminderung des Aktivkohleverbrauchs um mehr als 25% führt. Der Erfindung liegt die Erkenntnis zugrunde, daß die sauren Bestandteile der Verbrennungsabgase, wie SO₂, SO₃, HCl und HF, in der Naßwäsche bestrebt sind, sich an den Aktivkohlepartikeln anzulagern. Dieser Tendenz wirkt die Erfindung entgegen. Ca(OH)₂ bzw. CACO₃ reagiert bereits in der Gasphase mit den saueren Bestandteilen der Verbrennungsabgase, so daß die Aktivkohlepartikel in der Naßwäsche voll für ihre eigentliche Funktion zur Verfügung stehen, nämlich für die Adsorption vor allen Dingen von Hg⁰ und Hg²⁺ sowie der Dioxine und Furane. Der zusätzliche Materialaufwand ist vernachlässigbar gering, da gelöschter Kalk bzw. Kalkstein ein vergleichsweise billiges Material ist. Auch hält sich der zusätzliche anlagentechnische Aufwand in Grenzen. Es verbleibt also ein erheblicher Kostenvorteil.

Im Abgas-Wärmetauscher sinkt die Temperatur unter den Taupunkt der Schwefelsäure, so daß H₂SO₄ auskondensiert und verstärkt mit den Partikeln aus gelöschtem Kalk bzw. aus Kalkstein in Reaktion treten kann. Handelt es sich um einen regenerativen Wärmetauscher, so wird ein Durchschleusen der Schadstoffe zur Reingasseite hin verhindert.

Eine besonders günstige Verfahrensführung ergibt sich dadurch, daß die Aktivkohlepartikel direkt bei der aus der Naßwäsche entstehenden Suspension abgetrennt werden, und zwar vorzugsweise - wie es an sich aus der DE-A-3 941 894 bekannt ist - durch Flotation, wobei es vorteilhaft ist, die Suspension vorher einer Teilentwässerung zu unterziehen.

Ferner wird in Weiterbildung der Erfindung vorgeschlagen, mindestens einen Teil der Aktivkohlepartikel in die Naßwäsche zu rezirkulieren. Diesem Verfahrensschritt liegt die Erkenntnis zugrunde, daß die Aktivkohlepartikel, obwohl sie nur in geringer Menge eingesetzt werden, mit einem einzigen Durchgang durch die Naßwäsche noch nicht erschöpft sind, sondern durchaus noch über ein aktivierbares Adsorptionspotential verfügen.

Dabei ist es besonders vorteilhaft, einen Teil der rezirkulierten Aktivkohlepartikel vor Eintritt in die Naßwäsche einer thermischen Desorption zu unterwerfen. Auf diese Weise besteht die Möglichkeit, die Aktivkohlepartikel im Kreislauf zu führen.

Bei der thermischen Desorption der Aktivkohlepartikel kommt es zu einer Trocknung des Materials, so daß die vorteilhafte Möglichkeit besteht, die desorbierten Aktivkohlepartikel zur Mischung mit den Partikeln aus gelöschtem Kalk bzw. aus Kalkstein zu rezirkulieren. Der Aktivkohle-Kreislauf erstreckt sich also zurück bis zum Verfahrensschritt der Partikelmischungs-Erzeugung.

Die Erfindung schafft ferner eine Vorrichtung zum Durchführen des obigen Verfahrens mit einem REA-Wäscher, der Gaseinlaß- und -auslaßleitungen aufweist, wobei diese Vorrichtung gekennzeichnet ist durch eine Mischeinrichtung für Aktivkohlepartikel und Partikel aus gelöschtem Kalk und/oder aus Kalkstein, die stromauf eines dem REA-Wäscher vorgeschalteten Abgas-Wärmetauschers mit der Gaseinlaßleitung des REA-Wäschers verbunden ist. Die in der Mischeinrichtung erzeugte Partikelmischung wird also stromauf des REA-Wäschers in die Verbrennungsabgase eingedüst.

Die Mischeinrichtung ist stromauf des Abgas-Wärmetauschers anzuordnen, so daß auskondensierte Schwefelsäure im Wärmetauscher verstärkt mit dem gelöschten Kalk bzw. dem Kalkstein in Reaktion treten kann.

Vorteilhafterweise ist dem REA-Wäscher eine Einrichtung zum Abtrennen der Feststoffe aus der bei der Naßwäsche entstehenden Suspension nachgeschaltet, an die eine Flotationseinrichtung mit einem Gipsauslaß und einem Auslaß für Aktivkohlepartikel angeschlossen ist, wobei der Auslaß für Aktivkohlepartikel an eine zum REA-Wäscher führende Adsorptionsmittelleitung und an eine thermische Desorptionseinrichtung angeschlossen ist.

Dabei kann es vorteilhaft sein, den Auslaß der thermischen Desorptionseinrichtung an die Adsorptionsmittelleitung des REA-Wäschers und/oder an die Mischeinrichtung anzuschließen.

Die Erfindung wird im folgenden anhand bevorzugter Ausführungsbeispiele im Zusammenhang mit der beiliegenden Zeichnung näher erläutert. Die Zeichnung zeigt in:
- Fig. 1: ein Fließschema einer ersten Ausführungsform;
- Fig. 2: ein Fließschema einer zweiten Ausführungsform.

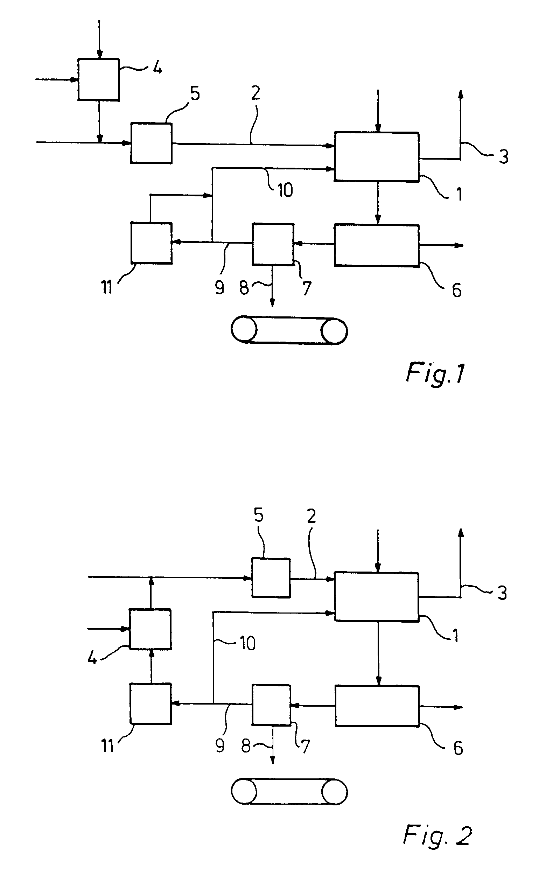

Die Vorrichtung nach Fig. 1 weist einen REA-Wäscher 1 auf, der mit einer Gaseinlaßleitung 2 und einer Gasauslaßleitung 3 verbunden ist. An die Gaseinlaßleitung 2 ist ein Mischer 4 angeschlossen, in dem eine Partikelmischung aus Aktivkohle und gelöschtem Kalk und/oder Kalkstein erzeugt wird. Die Partikelmischung wird stromauf des REA-Wäschers 1 in die Verbrennungsabgase eingedüst. Dabei kommt es zu einer Reaktion des gelöschten Kalks bzw. des Kalksteins mit den saueren Bestandteilen der Verbrennungsabgase, so daß diese im REA-Wäscher 1 nicht mehr mit den Aktivkohlepartikeln reagieren können. Letztere stehen also unverbraucht für die Adsorption der Schwermetalle und der organischen Verunreinigungen zur Verfügung.

Die Mischeinrichtung 4 ist stromauf eines Abgas-Wärmetauschers 5 angeordnet. Im Wärmetauscher 5 kommt es zu einer Kondensation von Schwefelsäure und einer verstärkten Reaktion der flüssigen Schwefelsäure mit dem gelöschten Kalk bzw. dem Kalkstein.

Dem REA-Wäscher 1 ist ein Hydrozyklon 6 nachgeschaltet. Die teilentwässerte Suspension gelangt von hier aus zu einer Flotationseinrichtung 7, die einen Gipsauslaß 8 und einen Aktivkohleauslaß 9 aufweist. Letztere ist über eine Adsorptionsmittelleitung 10 an den REA-Wäscher 1 angeschlossen und steht ferner mit einer thermischen Desorptionseinrichtung 11 in Verbindung. Deren Auslaß ist wiederum an die Leitung 10 angeschlossen. Das Adsorptionsmittel wird also unter partieller Desorption im Kreislauf gefördert.

Die Vorrichtung nach Fig. 2 unterscheidet sich von der nach Fig. 1 lediglich dadurch, daß die thermische Desorptionseinrichtung 11 an die Mischeinrichtung 4 angeschlossen ist. Die Erzeugung der Partikelmischung wird also in die Rezirkulation des Adsorptionsmittels eingebunden.

Im Rahmen der Erfindung sind durchaus Abwandlungsmöglichkeiten gegeben. Vor allen Dingen kann auf eine Rezirkulation des Adsorptionsmittels verzichtet werden, obwohl diese Verfahrensführung besonders günstig ist. Ferner besteht die Möglichkeit, den Verfahrensablauf dadurch positiv zu beeinflussen, daß (wie in der Zeichnung angedeutet) Kalkmilch in den REA-Wäscher eingegeben und damit die Naßwäsche auf etwa pH6 eingestellt wird.

## Patentansprüche

1. Verfahren zum Reinigen von schwefelhaltigen Verbrennungsabgasen aus Feuerungsanlagen, wobei die Verbrennungsabgase unter Zugabe von Aktivkohlepartikeln einer Entschwefelungs-Naßwäsche unterworfen werden,
**dadurch gekennzeichnet**,
daß die Aktivkohlepartikel mit Partikeln aus gelöschtem Kalk und/oder aus Kalkstein gemischt werden und daß die Partikelmischung stromauf eines der Naßwäsche vorgeschalteten Abgas-Wärmetauschers in die Verbrennungsabgase eingegeben wird.

2. Verfahren nach Anspruch 1, dadurch gekennzeichnet, daß die Aktivkohlepartikel aus der bei der Naßwäsche entstehenden Suspension abgetrennt werden.

3. Verfahren nach Anspruch 2, dadurch gekennzeichnet, daß die Abtrennung der Aktivkohlepartikel durch Flotation durchgeführt wird.

4. Verfahren nach Anspruch 2 oder 3, dadurch gekennzeichnet, daß die bei der Naßwäsche entstehende Suspension vor der Abtrennung der Aktivkohlepartikel teilentwässert wird.

5. Verfahren nach einem der Ansprüche 2 bis 4, dadurch gekennzeichnet, daß mindestens ein Teil der Aktivkohlepartikel in die Naßwäsche rezirkuliert wird.

6. Verfahren nach Anspruch 5, dadurch gekennzeichnet, daß ein Teil der rezirkulierten Aktivkohlepartikel vor Eintritt in die Naßwäsche einer thermischen Desorption unterworfen wird.

7. Verfahren nach Anspruch 6, dadurch gekennzeichnet, daß die desorbierten Aktivkohlepartikel zur Mischung mit den Partikeln aus gelöschtem Kalk und/oder aus Kalkstein rezirkuliert werden.

8. Vorrichtung zum Reinigen von Verbrennungsabgasen aus Feuerungsanlagen mit einem REA-Wäscher, der Gaseinlaß- und-auslaßleitungen aufweist,
**gekennzeichnet durch**
eine Mischeinrichtung (4) für Aktivkohlepartikel und Partikel aus gelöschtem Kalk und/oder aus Kalkstein, die stromauf eines dem REA-Wäscher (1) vorgeschalteten Abgas-Wärmetauschers (5) mit der Gaseinlaßleitung (2) des REA-Wäschers (1) verbunden ist.

9. Vorrichtung nach Anspruch 8, dadurch gekennzeichnet, daß dem REA-Wäscher eine Einrichtung zum Abtrennen der Feststoffe aus der bei der Naßwäsche entstehenden Suspension nachgeschaltet ist, an die eine Flotationseinrichtung (7) mit einem Gipsauslaß (8) und einem Auslaß (9) für Aktivkohlepartikel angeschlossen ist, wobei der Auslaß (9) für Aktivkohlepartikel an eine zum REA-Wäscher (1) führende Adsorptionsmittelleitung (10) sowie an eine thermische Desorptionseinrichtung (11) angeschlossen ist.

10. Vorrichtung nach Anspruch 8 oder 9, dadurch gekennzeichnet, daß der Auslaß der thermischen Desorptionseinrichtung (11) an die Adsorptionsmittelleitung (10) des REA-Wäschers angeschlossen ist.

11. Vorrichtung nach einem der Ansprüche 8 bis 10, dadurch gekennzeichnet, daß der Auslaß der thermischen Desorptionseinrichtung (11) an die Mischeinrichtung (4) angeschlossen ist.

## Claims

1. Method of cleaning combustion exhaust gases, which contain sulfur, from combustion plants, wherein the combustion gases are subjected to a desulfurisation wet washing with addition of activated carbon particles, characterised in that the activated carbon particles are mixed with particles of dissolved lime and/or limestone and that the particle mixture is introduced into the combustion exhaust gas upstream of an exhaust gas heat exchanger connected in front of the wet washing.

2. Method according to claim 1, characterised in that the activated carbon particles are separated from the suspension arising in the wet washing.

3. Method according to claim 2, characterised in that the separation of the activated carbon particles is carried out by flotation.

4. Method according to claim 2 or 3, characterised in that the suspension arising in the wet washing is partially dried before the separation of the activated carbon particles.

5. Method according to one of claims 2 to 4, characterised in that at least a part of the activated carbon particles is recirculated in the wet washing.

6. Method according to claim 5, characterised in that a part of the recirculated activated carbon particles is subjected to a thermal desorption before entry into the wet washing.

7. Method according to claim 6, characterised in that the desorbed activated carbon particles are recirculated for mixing with the particles of dissolved lime and/or limestone.

8. Device for cleaning combustion exhaust gases from combustion plants with an REA washer which has gas inlet and gas outlet ducts, characterised by a mixing equipment (4) for activated carbon particles and particles of dissolved lime and/or limestone, which is connected with the gas inlet duct (2) of the REA washer (1) upstream of an exhaust gas heat exchanger (5) connected in front of the REA washer (1).

9. Device according to claim 8, characterised in that an equipment for the separating out of solids from the suspension arising in the wet washing is connected behind the REA washer and is connected with a flotation equipment (7) with a gypsum outlet (8) and an outlet (9) for activated carbon particles, wherein the outlet (9) for activated carbon particles is connected with an adsorption medium duct (10), which leads to the REA washer (1), as well as with a thermal desorption equipment (11).

10. Device according to claim 8 or 9, characterised in that the outlet of the thermal desorption equipment (11) is connected with the adsorption medium duct (10) of the REA washer.

11. Device according to one of claims 8 to 10, characterised in that the outlet of the thermal desorption equipment (11) is connected with the mixing equipment (4).

## Revendications

1. Procédé de purification de gaz résiduaires de combustion sulfureux d'installations de chauffage, où les gaz résiduaires de combustion, en ajoutant des particules de charbon actif, sont soumis à un lavage de désulfuration par voie humide, caractérisé en ce que les particules de charbon actif sont mélangées avec des particules en chaux éteinte et/ou en carbonate de calcium et que le mélange de particules est introduit dans les gaz résiduaires de combustion en amont d'un échangeur de chaleur de gaz résiduaires monté en amont du lavage par voie humide.

2. Procédé selon la revendication 1, caractérisé en ce que les particules de charbon actif sont séparées de la suspension produite lors du lavage par voie humide.

3. Procédé selon la revendication 3, caractérisé en ce que la séparation des particules de charbon actif est exécutée par flottaison.

4. Procédé selon la revendication 2 ou 3, caractérisé en ce que la suspension produite lors du lavage par voie humide est partiellement drainée avant la séparation des particules de charbon actif.

5. Procédé selon l'une des revendications 2 à 4, caractérisé en ce qu'au moins une partie des particules de charbon actif est recirculée dans le lavage par voir humide.

6. Procédé selon la revendication 5, caractérisé en ce qu'une partie des particules recirculées du charbon actif, avant l'entrée dans le lavage par voie humide, est soumise à une désorption thermique.

7. Procédé selon la revendication 6, caractérisé en ce que les particules de charbon actif désorbées sont recirculées pour le mélange avec les particules en chaux éteinte et/ou en carbonate de calcium.

8. Dispositif de purification de gaz résiduaires de combustion d'installations de chauffage avec un laveur de désulfuration des gaz de fumée, qui présente des conduits d'entrée et de sortie des gaz, caractérisé par un dispositif de mélange (4) pour des particules de charbon actif et des particules en chaux éteinte et/ou en carbonate de calcium, qui est relié en amont d'un échangeur de chaleur (5) de gaz résiduaires disposé en amont d'un laveur de désulfuration des gaz de fumée (1) au conduit d'entrée des gaz (2) du laveur de désulfuration des gaz de fumée (1).

9. Dispositif selon la revendication 8, caractérisé en ce qu'il est disposé en aval du laveur de désulfuration des gaz de fumée une installation pour séparer les matières solides de la suspension produite lors du lavage par voie humide, à laquelle est raccordée un dispositif de flottaison (7) avec une sortie de gypse (8) et une sortie (9) pour les particules de charbon actif, la sortie (9) pour les particules de charbon actif étant raccordée à un conduit d'adsorbant (10) menant au laveur de désulfuration des gaz de fumée (1) et à un dispositif de désorption thermique (11).

10. Dispositif selon la revendication 8 ou 9, caractérisé en ce que la sortie du dispositif de désorption thermique (11) est raccordée au conduit d'adsorbant (10) du laveur de désulfuration des gaz de fumée.

11. Dispositif selon l'une des revendications 8 à 10, caractérisé en ce que la sortie du dispositif de désorption thermique (11) est raccordée au dispositif de mélange (4).
